# EUROPÄISCHE PATENTANMELDUNG

(11) **EP 1 297 877 A2**
(43) Veröffentlichungstag der Anmeldung: **02.04.2003**
(21) Anmeldenummer: 02021638.8
(22) Anmeldetag: 27.09.2002
(51) Int. Cl.: B01D 21/02, B01D 21/24, B01D 21/30

(54) **Vorrichtung zum Behandeln von verunreinigtem Wasser**

(30) Priorität: 28.09.2001 DE 20115985 U
(71) Anmelder: Aquadetox GmbH, 87764 Legau (DE)
(72) Erfinder: Dietmar Schmidt, D-87764 Legau (DE); Lorch, Roland, 88348 Bad Saulgau (DE); Jürgen Schaible, D-89299 Leutkirch (DE)
(74) Vertreter: Pfister, Stefan Helmut Ulrich

(57) **Zusammenfassung**

Die Erfindung betrifft eine Vorrichtung zum Behandeln von verunreinigtem Wasser, insbesondere zur Nachklärung von bereits in Klärstufen behandeltem, mit Schwebstoffen oder Bioschlamm angereichertem Wasser. Die Vorrichtung besteht aus einem insbesondere säulenartigen Behälter, dessen Hauptachse aus der Vertikalen verkippt ist, mit einem Zulauf und einem Ablauf. Im Inneren des Behälters sind Ablagerungsflächen vorgesehen. Der Behälter ist im Querschnitt rund beziehungsweise oval ausgebildet.

## Beschreibung

Die Erfindung betrifft eine Vorrichtung zum Behandeln von verunreinigtem Wasser, insbesondere zur Nachklärung von bereits in Klärstufen behandeltem, mit Schwebstoffen oder Bioschlamm angereichertem Wasser.

Bei der Aufbereitung von verunreinigtem Wasser, insbesondere bei der Nachklärung von bereits in Klärstufen behandeltem Wasser, welches mit Schwebstoffen oder Bioschlamm angereichert ist, ist es erforderlich, dieses Wasser durch Klärstufen einer Kläranlage zu leiten. In dieser Klärstufe sollen sich die Schwebstoffe und/oder der Bioschlamm absetzen können. Nach dem Absetzen müssen diese Bestandteile dann leicht aus der Klärstufe ableitbar sein, beispielsweise durch Ableiten in einen Schlammfang. Dazu sind im Raum schrägstehende im Wesentlichen kastenförfmige Kläreinrichtungen bekannt, die im Inneren des kastenförmigen Körpers Ablagerungsflächen aufweisen.

Das Wasser wird über diese Ablagerungsflächen geleitet, wobei sich die Schwebstoffe und Schlammbestandteile an diesen Flächen absetzen und nach unten, in der Regel entgegen der Strömungsrichtung des Wassers, in einen Sammelraum gelangen, der von Zeit zu Zeit entleert werden muß. Diese kastenförmigen Kläreinrichtungen sind auch als sogenannte Schrägklärer bekannt.

Die bekannten Schrägklärer sind in Ihrer Ausgestaltung verhältnismäßig aufwendig herzustellen. Sie bestehen aus einem viereckigen Kasten, der gekantet und zweifach geschweißt werden muß. Die Statik eines viereckigen Kastens ist dabei ungünstig, da daraus bestimmte Materialstärken für den Mantel des Kastens resultieren, was zu einem sehr hohen Gewicht des viereckigen Kastens führt. Im Eckbereich muß die Kerbwirkung des gebogenen Bleches bei der Statik berücksichtigt werden. Daraus resultiert auch, daß die Fertigungskosten für einen derartigen Schrägklärer sehr hoch sind.

Die Ablagerungsflächen werden durch einzelne Platten erhalten, die als Paket in dem Inneren des Kastens angeordnet werden. Auch die Herstellung dieser Pakete ist sehr aufwendig, da sie aus mehreren Einzelteilen zunächst montiert, das heißt zusammengeschraubt werden müssen, bevor sie in den Innenraum des Kastens eingeschoben werden können. Bekannt ist es auch, die Ablagerungsflächen einzeln in einem derartigen Kasten zu montieren. Auch ist der Ausbau der Ablagerungsflächen aus dem Behälter gemäß der Lösung nach dem Stand der Technik sehr aufwendig. Sie müssen zum Beispiel für Reinigungs- oder Wartungszwecke im Ganzen aus dem Behälter nach oben herausgezogen werden, was zum einen körperlich anstrengend und aufwendig ist und zum anderen muß über dem Behälter ausreichend Platz für die verhältnismäßig starren und großvolumigen Ablagerungsflächen vorgesehen sein.

Es ist Aufgabe der Erfindung, eine Vorrichtung zum Behandeln von verunreinigtem Wasser zur Verfügung zu stellen, die mit geringerem Material- und Kostenaufwand herstellbar ist.

Die Erfindung stellt eine Vorrichtung zum Behandeln von verunreinigtem Wasser, insbesondere zur Nachklärung von bereits in Klärstufen behandeltem, mit Schwebstoffen oder Bioschlamm angereichertem Wasser zur Verfügung, die aus einem insbesondere säulenartigen Behälter, dessen Hauptachse aus der Vertikalen verkippt ist, zur Verfügung gestellt, wobei der Behälter einen Zulauf und einen Ablauf besitzt und im Inneren des Behälters Ablagerungsflächen vorgesehen sind. Die Vorrichtung zeichnet sich dadurch aus, daß der Behälter im Querschnitt rund beziehungsweise oval ausgebildet ist. Diese Ausbildung erlaubt eine wesentlich kostengünstigere Herstellung einer solchen Vorrichtung aufgrund der günstigeren Statik. Im Vergleich zu einem kastenförmigen Gebildet hat ein rohrförmiges Gebilde eine günstigere Statik. Somit kann eine geringere Materialstärke für den Mantel der Vorrichtung gewählt werden. Hieraus resultiert auch gleichzeitig eine entsprechende Gewichtsersparnis. Aus der Materialeinsparung resultiert gleichzeitig eine unmittelbare Kostenersparnis. Transporte fertiger Vorrichtungen an den Einsatzort werden ebenfalls erleichtert. Die bei den kastenförmig ausgebildeten Schrägklärern notwendigen Schweißarbeiten der Kanten sind bei einer rohrförmigen Ausbildung nicht mehr notwendig. Auch hieraus resultiert eine Kosten- und Zeitersparnis.

Erfindungsgemäß wird dabei von Behältern in den Vorrichtungen ausgegangen, deren Hauptachse aus der Vertikalen verkippt ist.

Als Behälter können hierbei zum Beispiel Zylinder oder Prismen mit im Wesentlichen geraden, parallel verlaufenden Mantelkanten vorgesehen sein, wenngleich die Erfindung auf solche, im Wesentlichen säulenartige Behälter nicht beschränkt ist, sondern gleichfalls auch andere, bauchige oder auch zum Beispiel kegelstumpfartige Behälter umfaßt. Die Hauptachse ist dabei nicht gleichbedeutend mit der Symmetrieachse, sondern kann zum Beispiel als Flächennormale der Bodenfläche (diese stünde rechtwinklig zum Mantel) oder einer Geraden, die parallel zu einer Mantelfläche ist, angesehen werden. Im Falle eines Zylinders zum Beispiel wäre die Hauptachse identisch mit der Symmetrieachse, die den Mittelpunkt enthält.

In einer Weiterbildung der Erfindung ist es vorgesehen, daß der Behälter im unteren Bereich sich verjüngend insbesondere konisch ausgebildet ist. In diesem Bereich sammelt sich das aus den Ablagerungsflächen nach unten abgerutschte Biomaterial als Schlamm. Die sich verjüngende, insbesondere konische Ausbildung hat dabei den Vorteil, daß der Schlamm durch einströmendes Wasser nicht wieder aufgewirbelt wird, sondern so lange in dem unteren Bereich verbleibt, bis er aus diesem Bereich abgeleitet wird.

Eine Weiterbildung der erfindungsgemäßen Lösung sieht vor, daß der Zulauf für das zu klärende Wasser mittig bezogen auf den Behälter angeordnet ist.

Es ist jedoch auch gemäß einer weiteren Ausführungsform der Erfindung möglich, daß der Zulauf seitlich am Behälter angeordnet ist, wobei dann der Zulauf mit einer ins Zentrum des Behälters führenden Leitung verbunden ist, derart, daß das Wasser im Zentrum jedoch unterhalb der Ablagerungsfläche hinzugeführt wird. Das Wasser steigt dann entlang der Ablagerungsfläche nach oben, wobei sich dabei die Schwebstoffe beziehungsweise Schlammanteile an den Ablagerungsflächen ablagern und entgegen der Strömungsrichtung des Wassers nach unten absetzen. Die Schrägstellung der gesamten Vorrichtung hat dabei den Vorteil, daß das ausfallende Material keinen langen Weg zum Absinken hat, sondern relativ schnell, nämlich nur nach wenigen cm, auf die schräggestellten Ablagerungsflächen trifft.

Die mittige Einleitung des Wassers nützt zum Beispiel bei einem zylinderartigen Behälter die günstigen Symmetrieeigenschaften aus. Das einströmende Wasser verteilt sich dabei gleichmäßig um den Mittelbereich herum, wodurch Turbolenzen, soweit sie auftreten, möglichst unterdrückt werden und so eine Verbesserung der Ablagerung ergeben.

Es ist auch vorgesehen, daß unterhalb der konusartigen Verjüngung eine Öffnung vorgesehen ist, die über eine Leitung mit einem Ventil den Behälter mit dem Schlammfang beziehungsweise der Vorklärung der Kläranlage verbindet. Die Ableitung des Klärschlamms kann selbstverständlich auch in einen anderen Behälter beziehungsweise Anlagenteil der Kläranlage erfolgen.

Entsprechend einer Weiterbildung der Erfindung ist es vorgesehen, daß ein Stellglied zum Öffnen und Schließen des Ventils vorgesehen ist. Des Weiteren hat es sich als vorteilhaft herausgestellt, wenn eine Einrichtung an den Behälter angeordnet ist, die die Höhe beziehungsweise Menge des gesammelten Klärschlamms anzeigt und dann ein Signal zu einem Stellglied zum Öffnen des Ventils erzeugt, wenn der Schlamm eine bestimmte Füllhöhe erreicht hat. Die Einrichtung erzeugt ein weiteres Signal, wenn der sich verjüngende Teil des Behälters keinen Schlamm mehr enthält, wodurch dann das Ventil geschlossen wird.

Ein weiterer Aspekt der Erfindung sieht vor, daß der Behälter mit einer Brauchwasservorhaltung über den Ablauf für das geklärte Wasser verbunden ist. Von besonderen Vorteil ist es, wenn der Behälter und die Brauchwasservorhaltung eine gemeinsame Baugruppe bilden. Dies ist insbesondere aus anlagentechnischen Gründen vorteilhaft, da die Montage vor Ort durch eine derartige Ausführung wesentlich erleichtert wird.

Die Aufgabe der Erfindung wird auch durch eine Vorrichtung mit Ablagerungsflächen gelöst, insbesondere durch eine Vorrichtung entsprechend einer oder mehrerer der zuvor beschriebenen Ausbildungen, die sich dadurch auszeichnet, daß die Ablagerungsflächen als wabenförmige Lamellenkörper ausgebildet sind. Durch die Ausbildung als wabenförmige Lamellenkörper wird insbesondere eine große Oberfläche für das Abklären der Schwebstoffe beziehungsweise Schlammanteile gebildet. Es wird an dieser Stelle erklärt, daß auch für den nachfolgend beschriebenen Lamellenkörper im Rahmen einer Erteilung ein eigenständiger Schutz beansprucht werden kann. Dabei löst der nachfolgend beschriebene Lamellenkörper ebenfalls die eingangs beschriebene Aufgabe.

Entsprechend einer Weiterbildung der Erfindung ist es vorgesehen, daß die wabenförmigen Lamellenkörper aus Platten erhalten sind, die wabenförmig beziehungsweise halbrund profiliert sind. Aus diesen wabenförmig bezieziehungsweise halbrund profilierten Platten erhält man durch Zusammenfügen von mindestens zwei derartigen Platten ein wabenförmiges Gebilde. Dieses läßt sich durch Zusammenfügen mehrerer solcher Platten auch als Lamellenpaket zusammenfügen, das dann als Paket in den Behälter einschiebbar ist.

Entsprechend einer besonders vorteilhaften Weiterbildung der erfindungsgemäßen Lösung besteht der Lamellenkörper aus einzelnen, nicht oder lösbar fest miteinander verbundenen Rohren. Die Rohre können dabei lose in den Behälter eingeschoben werden, wobei lediglich ein Anschlag an der Stelle vorzusehen ist, bis zu der die Rohre in den Behälter eingeführt werden sollen. Sind die Rohre derart in den Behälter eingeschoben, daß sie das gesamte Volumen des Behälters ausfüllen, ist ebenfalls ein entsprechendes Lamellenpaket gebildet.

Entsprechend einer Weiterbildung der Erfindung ist es daher vorgesehen, daß die Anzahl der Rohre von dem Volumen des Behälters beziehungsweise eines Teiles davon in der sich aus dem Querschnitt des Behälters und dem Durchmesser der Rohre ergebenden Menge bestimmt ist. Zur Erleichterung der Montage der Rohre für den Lamellenkörper ist es vorgesehen, diese Rohre zu einem Rohrbündel lösbar fest miteinander zu verbinden.

Selbstverständlich kann das Rohrbündel einen runden Querschnitt aufweisen. Es kann aber auch einen ovalen oder rechteckigen Querschnitt besitzen, je nach dem, wie der Behälter beziehungsweise der Innenraum des Behälters ausgebildet ist, in dem das Rohrbündel angeordnet werden soll. Die Rohre für den Lamellenkörper beziehungsweise für die Rohrbündel können dabei aus flexiblen Material wie zum Beispiel Stahl, Kunststoff, Glasfaserkunststoff oder ähnlichen Materialien gebildet sein.

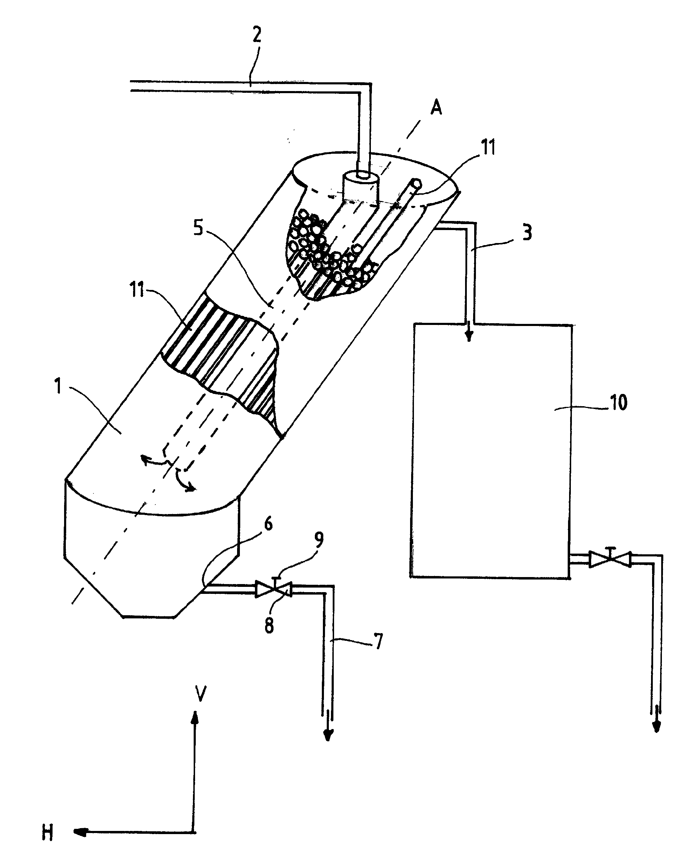

Die Erfindung wird nachfolgend anhand eines einzigen Ausführungsbeispiels beschrieben. Es zeigt
- Fig. 1: in schematischer Ansicht eine Ausführungsform der Erfindung mit einem Behälter und einer daran sich anschließenden Brauchwasservorhaltung.

In Fig. 1 ist die Vorrichtung zum Behandeln von verunreinigtem Wasser in einer teilweise geschnittenen Ansicht dargestellt. In dem Behälter 1 ist ein aus einer Vielzahl von lose in diesen Behälter eingeschobenen Rohre 11 gebildeten Rohrbündel angeordnet. Zur Veranschaulichung der Ausbildung des Rohrbündels ist ein Rohr 11 teilweise aus diesem Bündel herausgezogen. Der Zulauf 2 ist mit einer in das Zentrum des Behälters 1 führenden Leitung 5 verbunden, dabei führt die Leitung 5 das zugeleitete Wasser derart, daß es unterhalb des Rohrbündels in das Behälterinnere ausströmt. Durch die dichte Anordnung des Rohrbündels um die Leitung 5 ist das eintretende Wasser gezwungen, innerhalb der Rohre 11, die gleichzeitig als Ablagerungsflächen 4 dienen, nach oben zu steigen. Durch die Schrägstellung des Behälters 1 wird erreicht, daß die Schwebstoffe beziehungsweise Verunreinigungen des Wassers sich an den Rohrflächen in sehr kurzer Zeit absetzen und entgegen der Fließrichtung des Wassers nach unten bewegen können. Sie setzen sich in dem unteren Bereich des Behälters 1 ab, der sich verjüngend, insbesondere konusartig ausgebildet ist.

Die Hauptachse A ist gegenüber der Vertikalen V verkippt. Mit dem Bezugszeichen H ist die Horizontale beziehungsweise Aufstellfläche für den Behälter beziehungsweise für die Behältergruppe bezeichnet. Die Verkippung der Hauptachse A gegenüber der Vertikalen V beträgt dabei zwischen 30° und 60°. In einer bevorzugten Ausgestaltung werden 35° bis 55° vorgeschlagen.

Oberhalb des Rohrbündels ist der Ablauf 3 angeordnet, durch den das geklärte Wasser austreten kann. In der Darstellung gemäß der Fig. 1 ist es vorgesehen, daß das geklärte Wasser in den Brauchwasserbehälter 10 strömen kann. Von diesem Brauchwasserbehälter kann dann das geklärte Wasser wieder dem Brauchwasserkreislauf zugeführt werden. In dem sich verjüngenden, konusartig ausgebildeten unteren Teil des Behälters 1 ist eine Öffnung 6 angeordnet, an die eine Leitung 7 angeschlossen ist. Diese Öffnung 6 ist im Zusammenwirken mit der Leitung 7 dafür vorgesehen, daß der sich in dem unteren Bereich des Behälters 1 angesammelte Schlamm abgeleitet werden kann. Dabei ist es in der Ausführungsform, die in der Fig. 1 dargestellt ist, weiterhin vorgesehen, daß in der Leitung 7 ein Ventil 8 angeordnet ist, das bei einem entsprechenden Füllstand des Klärschlamms geöffnet wird und bei Entleerung dann wieder zu schließen ist. Entsprechend einer bestimmten Ausführungsform der Erfindung ist es vorgesehen, daß an dem Ventil 8 ein Stellglied 9 zum Öffnen und Schließen des Ventils angeordnet ist. Dieses Stellglied 9 erhält von einer in der Fig. 1 nicht näher dargestellten Einrichtung dann ein entsprechendes Signal zum Öffnen des Ventils, wenn die Höhe beziehungsweise Menge des gesammelten Klärschlamms ein bestimmtes, vorgegebenes Volumen übersteigt. Diese Einrichtung gibt auch ein Signal an das Stellglied, wenn der Klärschlamm aus dem unteren Bereich des Behälters 1 abgeleitet ist.

Die jetzt mit der Anmeldung und später eingereichten Ansprüche sind Versuche zur Formulierung ohne Präjudiz für die Erzielung weitergehenden Schutzes. Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Vorrichtung zum Behandeln von verunreinigtem Wasser, insbesondere zur Nachklärung von in Klärstufen behandeltem, mit Schwebstoffen oder Bioschlamm angereichertem Wasser, bestehend aus einem insbesondere säulenartigen Behälter (1), dessen Hauptachse (A) aus der Vertikalen (V) verkippt ist, mit einem Zulauf (2) und einem Ablauf (3), wobei im Inneren des Behälters Ablagerungsflächen (4) vorgesehen sind, **dadurch gekennzeichnet, dass** der Behälter (1) im Querschnitt rund bzw. oval ausgebildet ist.

2. Vorrichtung nach Anspruch 1, **dadurch gekennzeichnet, dass** der Behälter (1) im unteren Bereich sich verjüngend, insbesondere konisch ausgebildet ist.

3. Vorrichtung nach einem oder beiden der vorstehenden Ansprüche, **dadurch gekennzeichnet, dass** der Zulauf (2) mittig bezogen auf den Behälter (1) angeordnet ist und/oder der Zulauf (2) parallel zur Hauptachse (A) angeordnet ist und/oder der Zulauf (2) mit einer ins Zentrum des Behälters (1) führenden Leitung (5) verbunden ist, derart, dass das Wasser im Zentrum jedoch unterhalb der Ablagerungsflächen (4) zugeführt wird.

4. Vorrichtung nach einem oder mehreren der vorstehenden Ansprüche, **dadurch gekennzeichnet, dass** unterhalb des Konus des Behälters (1) eine Öffnung (6) vorgesehen ist, die über eine Leitung (7) mit einem Ventil (8) den Behälter (1) mit dem Schlammfang bzw. der Vorklärung der Kläranlage verbindet, bzw. ein Ableiten des gesammelten Klärschlamms ermöglicht.

5. Vorrichtung nach einem oder mehreren der vorstehenden Ansprüche, **dadurch gekennzeichnet, dass** ein Stellglied (9) zum Öffnen und Schließen des Ventils (8) vorgesehen ist.

6. Vorrichtung nach einem oder mehreren der vorstehenden Ansprüche, **dadurch gekennzeichnet, dass** eine Einrichtung angeordnet ist, die die Höhe bzw. Menge des gesammelten Klärschlamms anzeigt und/oder ein Signal zu einem Stellglied (9) zum Öffnen bzw. Schließen des Ventils (8) erzeugt, wenn der Schlamm einen bestimmten Füllstand erreicht hat.

7. Vorrichtung nach einem oder mehreren der vorstehenden Ansprüche, **dadurch gekennzeichnet, dass** der Behälter (1) mit einer Brauchwasservorhaltung (10) über den Ablauf (3) verbunden ist.

8. Vorrichtung nach einem oder mehreren der vorstehenden Ansprüche, **dadurch gekennzeichnet, dass** der Behälter (1) und die Brauchwasservorhaltung (10) eine gemeinsame Baugruppe bilden.

9. Vorrichtung mit Ablagerungsflächen, insbesondere nach einem oder mehreren der vorstehenden Ansprüche, **dadurch gekennzeichnet, dass** die Ablagerungsflächen (4) als insbesondere wabenförmige Lammellenkörper ausgebildet sind.

10. Vorrichtung nach einem oder mehreren der vorstehenden Ansprüche, **dadurch gekennzeichnet, dass** die wabenförmigen Lamellenkörper aus Platten erhalten sind, die wabenförmig beziehungsweise halbrund profiliert sind und/oder der Lammellenkörper aus einzelnen, nicht oder lösbar miteinander verbundenen Rohren (11) gebildet ist.

11. Vorrichtung nach einem oder mehreren der vorstehenden Ansprüche, **dadurch gekennzeichnet, dass** die Anzahl der Rohre (11) von dem Volumen des Behälters (1) bzw. eines Teiles davon in der sich aus dem Querschnitt des Behälters (1) und dem Durchmesser der Rohre (11) ergebenden Menge bestimmt ist.

12. Vorrichtung nach einem oder mehreren der vorstehenden Ansprüche, **dadurch gekennzeichnet, dass** die Rohre (11) zu einem Rohrbündel lösbar fest miteinander verbunden sind.

13. Vorrichtung nach einem oder mehreren der vorstehenden Ansprüche, **dadurch gekennzeichnet, dass** das Rohrbündel einen im wesentlichen runden Querschnitt aufweist und/oder dass das Rohrbündel einen ovalen Querschnitt besitzt und/oder dass das Rohrbündel in einem im wesentlichen rechteckigen Querschnitt ausgebildet ist.

14. Vorrichtung nach einem oder mehreren der vorstehenden Ansprüche, **dadurch gekennzeichnet, dass** die Rohre (11) aus flexiblen Material, wie z.B. Stahl, Kunststoff, Glasfaserkunststoff usw. gebildet sind.
